Europäisches Patentamt

European Patent Office

Office européen des brevets

(19)

(11) **EP 1 370 045 B1**

(12) **FASCICULE DE BREVET EUROPEEN**

(45) Date de publication et mention
de la délivrance du brevet:
**20.09.2006 Bulletin 2006/38**

(51) Int Cl.:
*H04L 29/06* *(2006.01)*     *H04L 12/56* *(2006.01)*

(21) Numéro de dépôt: **03011395.5**

(22) Date de dépôt: **20.05.2003**

(54) **Système d'accès à des données disponibles sur réseau actif**

Datenzugriffssystem zu den Daten in einem aktiven Netz

Data access system to data on an active network

(84) Etats contractants désignés:
**AT BE BG CH CY CZ DE DK EE ES FI FR GB GR
HU IE IT LI LU MC NL PT RO SE SI SK TR**

(30) Priorité: **03.06.2002 FR 0206821**

(43) Date de publication de la demande:
**10.12.2003 Bulletin 2003/50**

(73) Titulaire: **FRANCE TELECOM**
**75015 Paris (FR)**

(72) Inventeurs:
• **Gourhant, Yvon**
**22300 Lannion (FR)**
• **Mathieu, Bertrand**
**22300 Lannion (FR)**

• **Carlinet, Yannick**
**22300 Saint Michel en Grève (FR)**

(56) Documents cités:
• **JOHANSON M: "An RTP to HTTP video gateway"
INTERNATIONAL WORLD WIDE WEB
CONFERENCE, XX, XX, 1 mai 2001 (2001-05-01),
pages 499-503, XP002956217**
• **CHEN DING ET AL: "Selective Java applet
filtering on Internet" SYSTEMS, MAN, AND
CYBERNETICS, 1999. IEEE SMC '99
CONFERENCE PROCEEDINGS. 1999 IEEE
INTERNATIONAL CONFERENCE ON TOKYO,
JAPAN 12-15 OCT. 1999, PISCATAWAY, NJ, USA,
IEEE, US, 12 octobre 1999 (1999-10-12), pages
110-114, XP010363420 ISBN: 0-7803-5731-0**

EP 1 370 045 B1

**Description**

La présente invention concerne un système d'accès à des données disponibles sur un réseau actif, à partir d'un terminal quelconque apte à communiquer selon un protocole de communication en mode non connecté, du type http par exemple, et un procédé de mise en oeuvre du système

L'invention se situe dans le domaine des réseaux de communication, et plus particulièrement dans le routage d'informations, de manière transparente pour un usager, entre un terminal apte à communiquer selon un protocole de type http et des noeuds d'un réseau actif communiquant selon d'autres protocoles. Elle trouve typiquement son application dans l'accès, à partir d'un terminal quelconque, à des services développés sur réseau actif.

Les réseaux actifs sont une nouvelle approche des architectures réseaux dans laquelle les routeurs peuvent effectuer des traitements particuliers sur les flux de messages qui les traversent. Les réseaux actifs ont été créés dans les années 1994-1995 pour pallier le manque de flexibilité des réseaux traditionnels et s'adapter aux évolutions, toujours croissantes, des protocoles de transmission et de communication, des applications etc... On estime actuellement qu'il faut un délai de 6 à 8 ans entre l'émergence d'un nouveau service, sous la forme d'un protocole, et son déploiement à grande échelle dans une architecture de réseau de type client-serveur classique.

Les paquets actifs échangés dans les réseaux actifs contiennent non seulement des données, mais en plus un programme exécutable, encore appelé code, comme connu de l'article : JOHANSON M: "An RTP to HTTP video gateway" INTERNATIONAL WORLD WIDE WEB CONFERENCE, 1 mai 2001 (2001-05-01), pages 499-503. Des protocoles peuvent se trouver dans ce code, donnant ainsi une flexibilité accrue au déploiement de nouveaux protocoles dans le réseau. Le code est composé d'instructions prédéfinies qui font des traitements sur les données contenues dans le paquet.

Le code des paquets actifs contient également des références sur leur routage, c'est-à-dire l'adresse du noeud de destination ainsi qu'une procédure de routage. Chaque routage correspond donc à un traitement différent sur des noeuds actifs différents. Ainsi, lorsqu'il arrive sur un noeud actif, le contenu d'un paquet actif est transmis directement à un environnement d'exécution, présent sur le noeud, qui lit le code contenu dans le paquet actif et qui l'exécute.

Les noeuds actifs permettent donc d'effectuer des traitements sur les données contenues dans les paquets actifs qu'ils retransmettent, ce que les routeurs classiques ne peuvent pas faire. Ces traitements ne sont plus localisés en un seul endroit, c'est à dire sur le serveur et le terminal client comme dans l'architecture client-serveur classique, mais ils sont délocalisés dans les différents noeuds actifs du réseau actif. Les noeuds actifs sont donc bien plus évolués que les routeurs traditionnels, car ils doivent pouvoir interpréter des programmes, être extensibles, et bien sûr savoir gérer le réseau.

L'invention va maintenant être présentée au regard d'une réalisation de l'art antérieur:

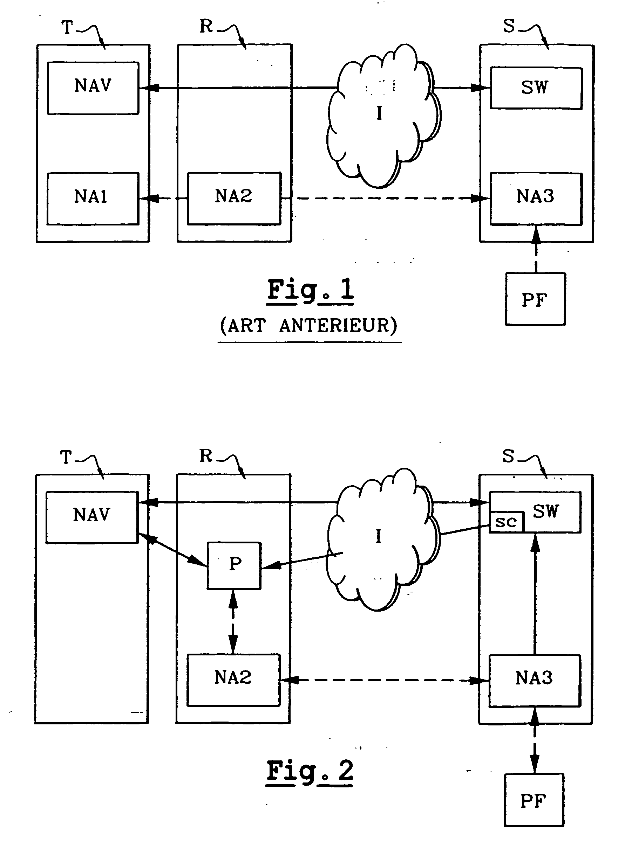

-  la figure 1 est un schéma d'une architecture de réseau telle qu'elle existe aujourd'hui.

L'architecture schématisée sur la figure 1 est de type client-serveur. Le logiciel client, c'est à dire le navigateur NAV, implanté dans le terminal T d'un usager, utilise un protocole de communication en mode non connecté de type http ("HyperText Transfert Protocole" en terminologie anglo-saxonne) pour accéder, via le réseau I Internet, à des documents hébergés sur un serveur distant, référencé SW, de type serveur web ou wap. Les documents sont représentés à l'aide d'un langage de description de type html ("HyperText Mark-up Language" en terminologie anglo-saxonne) et sont encapsulés dans des paquets IP. Des routeurs R d'accès se chargent de véhiculer l'information contenue dans les paquets.

Dans l'exemple illustré sur la figure 1, le serveur SW distant est installé dans un serveur S central. Le serveur S central, le routeur R et le terminal T comportent en outre chacun un noeud actif, noté respectivement NA3, NA2 et NA1. Ces noeuds actifs sont interconnectés entre eux et forment un réseau actif.

Le réseau actif ainsi formé est par exemple un réseau connu sous le nom de ANTS ("Active Node Transfert System" en terminologie anglo-saxonne) qui est constitué par un groupe de noeuds interconnectés, comportant un environnement d'exécution. Chaque noeud actif est relié à ses voisins par une couche de liaison, certains d'entre - eux pouvant être des routeurs IP classiques. Une plate-forme PF permet de commander les noeuds actifs et de leur fournir la logique d'un service à offrir sur le réseau actif par exemple.

Sur la figure 1, les informations transmises par les différents protocoles du réseau actif sont représentées en traits discontinus, alors que les informations transmises selon le protocole de communication non connecté, de type http, sont représentées en traits pleins.

Dans cette configuration, le réseau non connecté de type http, et le réseau actif ne communiquent pas du tout. Ainsi, pour qu'un usager puisse accéder à des informations ou à un service développé à son intention, sur le réseau actif, un noeud actif NA1 doit nécessairement être implanté dans son terminal T. Aucune interconnexion n'est actuellement possible entre les deux types de réseaux.

Le fait de devoir implanter un noeud actif NA1 dans le terminal T limite considérablement l'utilisation et donc le déploiement des réseaux actifs. En effet, les capacités de traitement et de mémoire d'un terminal mobile notamment, tel qu'un téléphone portable ou un assistant personnel par exemple, sont trop restreintes pour pouvoir y implanter un noeud actif. Un utilisateur de terminal mobile ne peut donc pas accéder, actuellement, aux données véhiculées sur un réseau actif.

Il est également possible qu'un utilisateur souhaite accéder à des services offerts par un réseau actif au moyen d'un ordinateur classique, sans vouloir y installer de noeud actif.

Enfin, pour certains protocoles déployés dans les réseaux actifs, il n'est pas souhaitable que le terminal T d'un utilisateur final ait accès aux données et programmes qui circulent dans le réseau actif. La possibilité d'éviter l'implantation d'un noeud actif dans le terminal d'un usager, permettrait donc d'améliorer la sécurité des données transitant dans les noeuds du réseau actif.

Aussi, le problème technique à résoudre par l'objet de la présente invention est de proposer un système d'accès à des données véhiculées dans des paquets actifs sur un réseau actif constitué de noeuds actifs interconnectés, à partir d'au moins un terminal apte à communiquer selon un protocole de communication en mode non connecté (http) pour visualiser au moins une page d'informations hébergée par un serveur distant, qui permettrait d'une part d'accéder aux données du réseau actif via des pages d'informations et non pas directement par le terminal, afin d'éviter l'implantation d'un noeud actif dans le terminal, et d'autre part de basculer, de manière transparente pour un utilisateur, d'une application de type client-serveur classique à une application sur réseau actif.

La solution au problème technique posé est obtenue, selon la présente invention, du fait qu'une sur-couche de protocole de communication en mode non connecté (http) est stockée dans un hyper lien de ladite page d'informations pour permettre l'envoi d'une requête spécifique de création d'un paquet actif à une passerelle apte, d'une part à extraire les informations contenues dans ladite requête spécifique pour créer ledit paquet actif et, d'autre part à extraire les données contenues dans un paquet actif lui parvenant d'un noeud actif pour créer une page d'informations.

Ainsi, le système selon l'invention permet d'accéder aux données enregistrées sur un réseau actif par l'intermédiaire d'une passerelle qui coopère avec une sur-couche spécifique stockée dans un hyper lien d'une page d'informations, de type page web ou wap. Grâce à ce système, il n'est plus nécessaire d'implanter un noeud actif dans le terminal de l'usager, si bien que n'importe quel type de terminal mobile ou non, communiquant selon un protocole de communication non connecté, peut accéder aux données du réseau actif et peut basculer à tout moment, sans que l'utilisateur s'en aperçoive, d'une application client-serveur classique à une application sur réseau actif.

La solution au problème technique posé est également obtenue, selon la présente invention, grâce à un procédé de mise en oeuvre de ce système.

Ce procédé est remarquable par le fait qu'il comporte des étapes consistant à :

- sélectionner un élément dans ladite page d'informations, afin d'activer ladite sur-couche de manière à ce qu'elle génère une requête spécifique de création de paquet actif,
- créer ledit paquet actif en y insérant les données transférées avec ladite requête spécifique,
- envoyer ledit paquet actif à un noeud actif du réseau actif,
- attendre, en réponse dudit noeud actif, un paquet actif dont les données sont écrites dans un format compatible avec le protocole de communication non connecté, de manière à ce que les données puissent être extraites et renvoyées vers le navigateur du terminal, sous forme d'une page d'informations.

D'autres particularités et avantages de l'invention apparaîtront à la lecture de la description suivante faite à titre d'exemple illustratif et non limitatif, en référence aux figures annexées qui représentent :

- la figure 2, un schéma d'une architecture réseau comportant un système d'accès à des données sur réseau actif selon la présente invention,
- la figure 3, un organigramme des étapes d'un procédé de mise en oeuvre du système de la figure 2,
- la figure 4 , un organigramme des étapes d'un procédé de mise en oeuvre du système de la figure 2, appliqué au déploiement d'un service particulier sur le réseau actif.

La figure 2 schématise une architecture de réseau de type client-serveur équipée d'un système d'accès à des données véhiculées sur un réseau actif. Sur cette figure, les mêmes références que sur la figure 1 sont utilisées pour désigner les mêmes éléments. De plus, les informations transmises par le réseau actif sont représentées en traits discontinus alors que les informations transmises selon le protocole de communication non connecté sont représentées en traits pleins. Dans la suite de la description, seul le protocole de communication http est décrit, mais l'invention ne se limite pas à ce protocole et on peut envisager d'autres types de protocoles en mode non connecté tels que SMTP, WAP, etc...

Selon cette architecture, au moins un terminal T communique, par l'intermédiaire d'un navigateur NAV, avec un serveur SW distant, de type serveur Web ou Wap, selon le protocole de communication http. Le protocole http est très utilisé notamment pour la consultation de pages d'informations. Les données, rassemblées sous forme de fichiers html, transitent dans des paquets IP via des routeurs R d'accès.

Par souci de simplification, un seul routeur R et un seul terminal T sont représentés sur la figure 2.

Le terminal T, équipé d'un navigateur NAV, est un terminal fixe ou mobile quelconque. Ainsi, ce peut par exemple être un téléphone portable, un assistant personnel PDA ("Personal Digital Assistant" en terminologie anglo-saxonne), un ordinateur portable ou non etc...

Un serveur S central constitue l'entité centrale pour le déploiement d'informations et/ou de services dans le réseau actif. Il comprend le serveur SW distant, de type web ou wap classique, ainsi qu'un noeud actif NA3 capable de traiter et d'exécuter des paquets actifs.

Ainsi, ce noeud actif NA3 est capable de créer des pages d'informations de type web ou wap, à partir de paquets actifs envoyés par la plate-forme PF de commande, afin de les transmettre au serveur SW.

D'autres noeuds actifs, tels que NA2, sont implantés dans des routeurs R. Tous les noeuds actifs, NA2, NA3..., sont interconnectés entre-eux pour constituer une plate-forme distribuée de réseau actif, de type ANTS par exemple. Dans le cas d'un réseau ANTS, les paquets actifs sont encore appelés capsules.

Bien sûr l'invention ne s'applique pas qu'à ce type de réseau et d'autres types de réseau actif peuvent être utilisés.

Une plate-forme PF de commande, appartenant par exemple à un fournisseur de service, permet de charger dans le noeud actif NA3 du serveur S central toutes les données que le fournisseur de services souhaite mettre à disposition sur le réseau actif. Pour cela, la plate-forme PF de commande de réseau actif envoie un paquet actif, ou capsule ANTS, sur le noeud NA3. Le noeud NA3 stocke les données dans une mémoire, telle qu'une mémoire volatile de type RAM par exemple. Les données stockées de la sorte sont des données spécifiques au service proposé. Par exemple dans le cadre d'un service de jeu avec des objets à gagner, les données vont correspondre à un identifiant de l'objet, ainsi qu'une description textuelle, des photos etc...

Le code contenu dans la capsule ANTS envoyée par la plate-forme PF de commande peut permettre en outre au noeud actif NA3 de créer une page d'informations à partir de l'extraction d'un fichier html inséré dans les données de la capsule. Ce fichier html décrit par exemple les données disponibles sur le réseau actif. La page d'informations ainsi créée est envoyée au serveur SW, selon le protocole http, pour afficher une page web ou wap comportant les informations mise à disposition sur le réseau actif.

Ainsi, lorsqu'un usager connecte son terminal T, via le navigateur NAV, au serveur SW, il peut télécharger et visualiser la page web créée et savoir que les informations et/ou le(s) service(s) décrit(s) dans la page sont disponibles et lui sont accessibles.

Si l'usager du terminal T souhaite recevoir des détails sur une information ou s'il souhaite recevoir le service décrit sur la page du serveur SW, il ne lui reste plus qu'à la (le) sélectionner dans la page d'informations, en cliquant sur un hyper lien correspondant dans une page écrite en langage html par exemple.

Dans ce cas, la sélection de l'information active une sur-couche sc de protocole http. Cette sur-couche est stockée dans un hyper lien de la page d'information, qui pointe vers une passerelle P implantée dans un routeur R situé à proximité du terminal T de l'usager.

Cette sur-couche sc de http utilise la syntaxe du protocole http mais une sémantique différente. Elle permet l'envoi, à la passerelle P, d'une requête spécifique de création d'un paquet actif. Un analyseur syntaxique stocké dans la passerelle P permet de reconnaître la requête spécifique et de commander la création d'un paquet actif correspondant.

Une communication de type client-serveur classique en mode non connecté comporte différentes étapes. Initialement le serveur est en attente de messages, puis le navigateur d'un terminal usager envoie un message, appelé requête, qui est réceptionné et traité par le serveur, lequel renvoie un message de réponse au navigateur. Les requêtes et les réponses doivent respecter une syntaxe particulière, spécifiée par le protocole utilisé par les deux participants à la communication (client et serveur), afin de garantir qu'il n'y ait pas de malentendu sur la nature des informations échangées. Ainsi par exemple dans le protocole http, il existe un type de requête appelé "get". Ce type de requête consiste à envoyer le message "GET nom-de-page" au serveur, où nom-de-page est le nom d'un fichier hébergé par le serveur qui contient les informations demandées par le client. De cette manière lorsqu'un navigateur envoie au serveur web un message de type "GET index.html", le serveur va envoyer en réponse un message contenant la page d'accueil correspondante. Cette page d'accueil est décrite au moyen d'un langage appelé html.

La sur-couche sc de http pointant vers la passerelle P utilise le protocole http mais avec une sémantique modifiée. Ainsi, lorsque la passerelle P reçoit une requête de la forme "GET /nom-de-capsule.cap", au lieu de chercher le fichier nommé "/nom-de-capsule.cap" comme le spécifie le protocole http, elle crée une capsule (ou paquet actif) de type "nom-de-capsule" et l'envoie dans le réseau actif pour y être traitée.

De plus, il est possible de spécifier des arguments pour la création de ladite capsule. Ces arguments définissent des caractéristiques supplémentaires. Il faut pour cela que le navigateur envoie le message "GET /nom-de-capsule.cap+arg1+arg2+...+argn". Chaque argument doit être séparé par le symbole '+'. Par exemple, si le navigateur NAV souhaite demander la création d'une capsule qui serait identifiée sous le nom "capsule-inscription" et si la création de cette capsule nécessite deux arguments de type entier, il doit envoyer à la passerelle P le message :

```
"GET /capsule-inscription.cap+23+32"
```

La sur-couche de http étant stockée dans un hyper lien, elle est totalement transparente pour l'usager et son navigateur NAV. L'envoi de la requête de création de paquet actif et la création du paquet actif par la passerelle P sont également totalement transparents vis-à-vis de l'utilisateur et du navigateur NAV.

Dans cette architecture, le routeur R d'accès permet non seulement de router le trafic IP entre l'usager et le serveur SW à travers le réseau Internet, mais il permet également de créer des paquets actifs, grâce à la passerelle P, et ainsi de se connecter au réseau actif via un noeud actif, NA2 par exemple.

Dans l'exemple de réalisation schématisé sur la figure 2, un noeud actif NA2, communiquant avec la passerelle P, est implanté dans le même routeur R que la passerelle P. L'invention ne se limite pas à ce cas de figure, le noeud actif NA2 peut être implanté dans un routeur différent. De plus, la passerelle peut communiquer avec plusieurs noeuds actifs situés dans des routeurs différents. La passerelle P ainsi que les noeuds actifs, tels que NA2, avec lesquels elle communique doivent cependant être situés à proximité des différents terminaux T d'usagers.

Après avoir reçu le paquet actif créé par la passerelle P, le noeud actif NA2 exécute le code de la capsule qui peut consister par exemple à aller chercher l'information, s'il ne l'a pas déjà stockée dans sa mémoire, dans un autre noeud actif du réseau, NA3 par exemple, et à la rapatrier.

Lorsque le noeud actif NA2 doit communiquer un résultat à l'usager du terminal T, il le fait également par l'intermédiaire de la passerelle P. Pour cela, il envoie à la passerelle P une capsule dans laquelle le résultat est inséré sous la forme d'un fichier html. Le code de la capsule comporte, dans ce cas, des instructions pour extraire le fichier html et le décharger sur le terminal T de l'usager.

La page ainsi créée peut elle aussi contenir, dans un hyper lien pointant vers la passerelle P, une sur-couche de http pour permettre à l'usager, par un simple clic, d'activer cette sur-couche et d'envoyer, en réponse, une autre requête de création de paquet actif, contenant des données à transmettre dans ce paquet actif.

Par ailleurs, à tout moment, un noeud du réseau actif peut envoyer un paquet actif à la plate-forme PF de commande pour modifier une donnée.

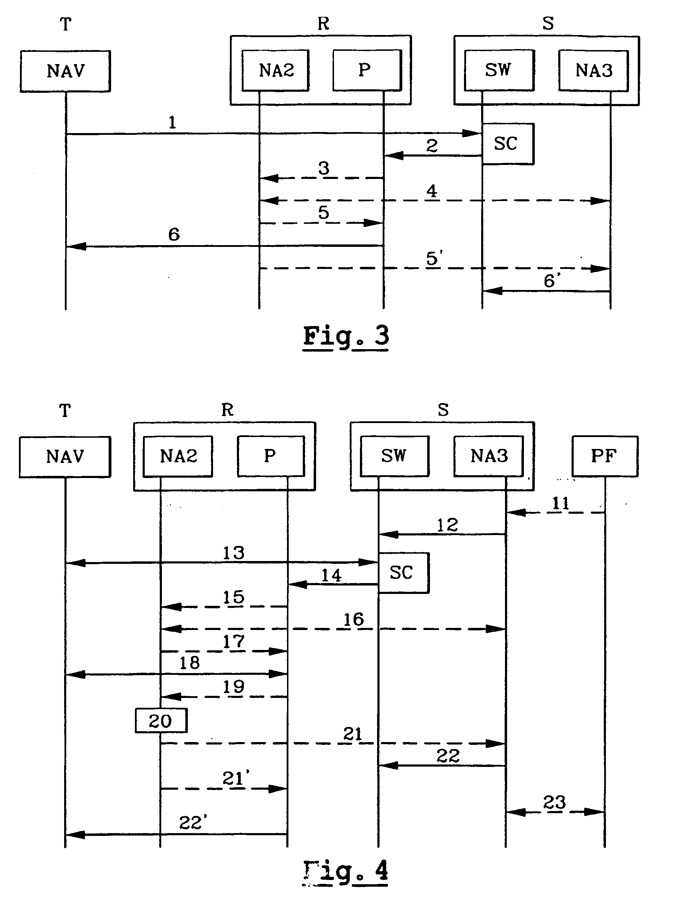

Pour mieux comprendre le fonctionnement, la figure 3 représente un organigramme d'un procédé de mise en oeuvre du système d'accès de la figure 2 utilisant un réseau actif de type ANTS et un terminal T communiquant, par l'intermédiaire de son navigateur NAV, selon le protocole http.

Après avoir visualisé une page d'informations, hébergée sur le serveur web SW, une première étape 1 consiste à sélectionner un élément, correspondant par exemple à une donnée dont le nom, un résumé ou une caractéristique est affiché sur cette page d'informations.

La sélection de cet élément active la sur-couche sc de http stockée dans un hyper lien pointant vers la passerelle P.

Cette activation correspond au comportement normal du navigateur NAV. En effet lorsque l'utilisateur clique sur un hyperlien, qui est constitué d'un nom de serveur et d'un nom de fichier, le navigateur va envoyer une requête de type "get" au serveur correspondant afin d'obtenir le fichier spécifié dans l'hyperlien. Si l'hyperlien contient la sur-couche sc, le navigateur va de la même façon envoyer une requête de type "get", et cette requête sera reconnue comme une demande d'envoi de capsule grâce à la sémantique particulière du nom de fichier requis, par exemple avec une extension .cap.

Cette sur-couche sc génère alors l'envoi à la passerelle P d'une requête spécifique de création de capsule (étape 2). Le format de cette requête spécifique est de type : "get/nom_capsule.cap ".

La passerelle P est constamment à l'écoute d'un port prédéfini dans un fichier de configuration. Lorsqu'un message est envoyé sur ce port, la passerelle effectue le traitement suivant : elle attribue tout d'abord à l'usager du terminal T un identifiant unique puis, elle analyse syntaxiquement, au moyen de son analyseur syntaxique, la requête http transmise par le navigateur NAV, via la sur-couche sc ou via une page d'informations classique et, s'il s'agit d'une demande de transmission de paquet actif émise via la sur-couche sc, elle crée et transmet ce paquet puis se met en attente d'un paquet actif de réponse.

La capsule ANTS créée par la passerelle P est ensuite envoyée au noeud actif NA2 le plus proche (étape 3), afin de se connecter au réseau actif. Le contenu de la capsule peut consister par exemple à demander au noeud NA2 de fournir les informations concernant l'élément sélectionné.

Si le noeud actif NA2 ne possède pas le contenu de l'élément sélectionné en mémoire, il va le chercher sur les noeuds distants, et préférentiellement sur NA3, implanté dans le serveur S central, qui a reçu de la plate-forme PF de commande toutes les données à introduire sur le réseau actif. Les données correspondantes sont ensuite rapatriées (étape 4) dans une capsule émise par le noeud NA3.

Une fois les données récupérées, le noeud NA2 crée par exemple une capsule ANTS dans laquelle les données sont insérées dans un format html, et un code est exécuté pour permettre la création d'une page d'informations. Cette capsule est envoyée soit à la passerelle P (étape 5) soit au noeud actif NA3 du serveur S central (étape 5').

Dans le premier cas, la passerelle P exécute le code de la capsule pour extraire les données écrites en html et créer une page d'informations à destination du terminal T. L'usager consulte ensuite le résultat sur la page d'informations téléchargée de la passerelle P vers son terminal T (étape 6).

Dans le deuxième cas, le noeud actif NA3 crée une page d'informations et la transmet au serveur SW (étape 6') afin que le terminal T puisse la télécharger et la consulter.

Ce moyen de rendre le protocole de communication http inter opérable avec le réseau actif ANTS est géré par le service fourni sur le réseau actif et non par l'usager. Le fait d'accéder à des données véhiculées sur le réseau actif à partir d'un terminal http est totalement transparent pour l'usager et son navigateur.

La figure 4 représente un organigramme d'un procédé de mise en oeuvre du système de la figure 2 dans un exemple particulier d'application. Dans cet exemple, un fournisseur de service met à disposition des usagers d'Internet un jeu qui consiste à deviner le prix d'un objet proposé sur la page web ou wap de son serveur SW. Un usager navigue sur Internet, par l'intermédiaire de son navigateur NAV, et arrive sur une page contenant l'explication des règles du jeu et une description des objets en jeu à ce moment.

La plate-forme PF de commande de jeu appartient au fournisseur de service, c'est-à-dire à l'organisateur du jeu dans cet exemple, et elle sert à donner le code du jeu, c'est à dire la manière dont il sera mis en oeuvre, ainsi que les pages web associées, qui indiquent la mise en jeu d'un nouvel objet, avec la description de cet objet.

Le noeud actif NA3, au sein du serveur S central, transmet au serveur SW web des informations sur l'introduction de nouveaux services. De cette manière un fournisseur de service peut introduire dans le serveur SW à la fois un service réseau actif, par exemple une application distribuée ou un nouveau protocole, et les descriptions associées sous forme de pages web, tel que par exemple le mode d'emploi de l'application, ou simplement informer que le nouveau service est déployé.

Une première étape du jeu, 11, consiste donc à enregistrer les règles du jeu et les caractéristiques des objets mis en jeu sur le serveur S central. Pour cela, le fournisseur de service, par l'intermédiaire de sa plate-forme PF de commande, introduit dans le réseau actif, et plus particulièrement dans le noeud NA3, les caractéristiques du jeu. Le noeud NA3 sauvegarde la logique du jeu, les différents objets mis en jeu avec leurs caractéristiques, c'est-à-dire leurs identifiants, leur prix, et/ou une description textuelle etc..., dans une mémoire volatile de type RAM. La plate-forme PF envoie donc une capsule dénommée par exemple "nouveau_jeu" pour enregistrer les règles du jeu et une capsule dénommée "nouvel_objet" pour chaque objet mis en jeu.

La capsule "nouvel_objet", par exemple, transporte les variables suivantes :"idObjet", qui est un entier représentant l'identifiant de l'objet mis en jeu , "juste Prix" qui est un entier représentant le juste prix de l'objet, "description" qui est une chaîne de caractères représentant une description textuelle de l'objet, "noeud_source" qui est l'adresse du noeud actif de départ, en l'occurrence l'adresse de la plate-forme PF de commande du jeu, et "noeud_destination" qui est l'adresse de la destination, en l'occurrence l'adresse du noeud actif NA3 implanté dans le serveur S central.

Le code contenu dans cette capsule comporte des instructions prédéfinies qui consistent à router la capsule vers le noeud_destination NA3 puis, lorsqu'elle est arrivée au noeud_destination NA3, à chercher dans la mémoire de ce noeud si l'objet repéré par la variable "*idObjet*" est déjà présent. Si la variable "idObjet" est identifiée alors cela signifie que l'objet est déjà enregistré dans la mémoire du noeud NA3 et qu'il n'y a rien à faire. En revanche, si la variable "idObjet" n'est pas repérée, alors les données transportées dans la capsule, c'est-à-dire l'identifiant, le juste prix et la description de l'objet sont stockées dans la mémoire du noeud NA3.

Le code de la capsule peut en outre commander au noeud actif NA3 la création d'une page d'informations, à partir des données qui lui sont fournies dans la capsule, sous forme de fichier html. Une fois la page créée le noeud actif NA3 la transmet au serveur SW par un protocole de communication de type http par l'intermédiaire d'un système de transfert de fichier hébergé par le serveur S central (étape 12).

Un usager connecte (étape 13) alors son terminal T sur le site SW de l'organisateur du jeu à travers le réseau Internet. L'usager navigue, par l'intermédiaire de son navigateur NAV, et arrive sur la page de l'organisateur du jeu contenant l'explication des règles du jeu et une description des objets en jeu à ce moment.

L'usager choisit un de ces objets, toujours par l'intermédiaire de son navigateur web, pour tenter de deviner son prix. Lorsqu'il trouve le juste prix, un message s'affiche, et lui annonce soit que le juste prix a déjà été deviné par un autre joueur, soit qu'il est le premier à trouver le juste prix et, dans ce cas, il remporte l'objet en jeu.

Lorsque l'usager sélectionne un objet pour tenter de deviner son prix, ou tout simplement lorsqu'il sélectionne une commande d'inscription, il déclenche une demande d'inscription au jeu en activant la sur-couche de http stockée dans un hyper lien de la page d'informations, pointant vers la passerelle P. La passerelle P reçoit donc une requête spécifique de http avec une sémantique particulière (étape 14). Cette requête se présente sous la forme "get/capsule-inscription.cap". L'analyseur syntaxique, stocké dans la passerelle P, reconnaît alors la requête de demande de création d'une capsule pour l'inscription de l'usager au jeu.

Une capsule "inscription" est alors créée par la passerelle P (étape 15). Cette capsule transporte les variables suivantes : "*idObjet*" *qui* est un entier représentant l'identifiant de l'objet pour lequel le joueur veut s'inscrire, "*idclient*" qui est un entier représentant un identifiant que la passerelle P attribue au joueur qui s'inscrit, "*noeud_source*" qui est l'adresse du noeud actif de départ, en l'occurrence l'adresse du noeud NA2 situé dans le routeur R d'accès, "*noeud_ destination*" qui est l'adresse de la destination, en l'occurrence l'adresse du noeud NA3 situé dans le serveur S central, "*retour*" qui est un booléen égal à *vrai* lorsque la capsule a déjà atteint sa destination et revient vers la source, et égal à faux dans l'autre sens.

Le code contenu dans la capsule renferme des instructions prédéfinies. Ainsi, si la capsule est transmise dans le sens de l'aller (variable "*retour*" égale à *faux*), et si elle se trouve au *noeud_source* NA2, le code consiste à chercher la description de l'objet dans la mémoire de ce noeud NA2. Si la variable "*IdObjet*" est détectée dans la mémoire, une capsule html, contenant une page web à transmettre est créée et envoyée à la passerelle P (étape 17). Cette page comprend une autre sur-couche de http dans un hyper lien pointant vers la passerelle P pour permettre au joueur d'effectuer une tentative d'annonce de prix (étape 18).

Par contre, si l'objet n'est pas trouvé dans la mémoire du noeud NA2, alors la capsule est envoyée vers le *noeud_destination* NA3. Lorsqu'elle atteint ce noeud NA3, le code consiste à lire les caractéristiques de l'objet dans la mémoire du noeud NA3 et les sauver dans les données transportées par la capsule, puis positionner la variable "*retour*" à *vrai* et router la capsule vers le noeud source NA2 (étape 16).

Si la capsule est véhiculée dans le sens de l'aller, mais ne se trouve ni au noeud source NA2 ni au noeud destination NA3, le code de la capsule consiste donc à router la capsule jusqu'à ce qu'elle atteigne le noeud destination NA3.

Si la capsule est transmise dans le sens du retour (variable *retour* égale à vrai),et si la capsule a atteint le noeud_source NA2, alors le code consiste à écrire les données transportées dans la mémoire du noeud NA2, créer une capsule html contenant une page web destinée à permettre au joueur d'effectuer une tentative de prix, et donner cette capsule html à la passerelle P (étape 17).

Tant que la capsule n'a pas atteint le noeud source NA2, le code consiste à la faire router vers ce noeud source.

Ainsi, le noeud actif NA2 situé dans le routeur R le plus proche de l'usager rapatrie les caractéristiques, dont le prix de l'objet en jeu, enregistrées dans la mémoire du noeud NA3 du serveur S central (étape 16).

La capsule html qui est créée (étape 17) sert à transporter une page web pour l'envoyer au navigateur NAV du joueur. Elle transporte les variables suivantes: "*html*" qui est une chaîne de caractères écrite en langage html qui représente une page web, "*noeud_source*" qui est l'adresse du noeud actif de départ, en l'occurrence NA2, "*noeud_ destination*"qui est l'adresse de la destination, en l'occurrence la passerelle P. La capsule doit être donnée à la passerelle P. Cette dernière extrait la page web écrite en html et contenue dans le paquet, et l'envoie au navigateur NAV de l'usager.

L'usager visualise la page d'informations qui lui parvient et propose alors un prix (étape 18) dans une fenêtre dédiée de la page web. La validation de cette tentative active une autre sur-couche de http stockée dans un hyper lien de cette page. Cette sur-couche génère une requête de création de capsule d'annonce de prix vers la passerelle P.

A l'étape suivante 19, la passerelle P crée alors une capsule d'annonce de prix en y insérant le prix tenté par le joueur, et l'envoi au noeud NA2. Cette capsule comporte un code consistant à ordonner au noeud actif NA2 de comparer (étape 20) le prix proposé par le joueur avec le juste prix de l'objet.

Cette capsule d'annonce de prix transporte les variables suivantes : "*idObjet*" représentant l'identifiant de l'objet, "*idClient*" représentant l'identifiant du joueur, "*prix*" qui est un entier représentant le prix proposé par le joueur, "*noeud_source*"qui est l'adresse du noeud actif de départ, en l'occurrence l'adresse du noeud NA2 situé dans le routeur R d'accès, "*noeud_destination*" qui est l'adresse de la destination, en l'occurrence l'adresse du noeud NA3 situé dans le serveur S central.

Le code contenu dans cette capsule renferment des instructions définies décrites ci-dessous.

Lorsque la capsule se situe au noeud source NA2, le code consiste à rechercher dans la mémoire du noeud les données relatives à l'objet identifié par *idObjet* puis à comparer le prix proposé par le joueur avec le prix de l'objet (étape 20).

Si le prix proposé est différent du juste prix alors une capsule html est créée et envoyée à la passerelle P (étape 21'). Cette capsule comporte un message à destination du joueur lui indiquant qu'il a perdu (étape 22').

Si le prix proposé est juste alors la capsule est routée vers le noeud destination NA3 (étape 21). Lorsque la capsule atteint ce noeud NA3, le code consiste à vérifier si l'objet a déjà été gagné par un autre joueur. Si c'est le cas, une capsule html est créée et envoyée vers le serveur SW (étape 22). Cette capsule contient alors une page web ou wap avec un message du type "hélas, c'est bien le juste prix mais c'est trop tard, l'objet a déjà été gagné".

En revanche si le prix proposé est juste et n'a pas encore été proposé par un autre joueur, alors cela signifie que l'objet est gagné. Dans ce cas, une capsule html, contenant une page web avec un message du type "c'est gagné vous avez remporté l'objet", est créée par le noeud NA3 et envoyée au serveur SW (étape 22). Dans ce cas, le noeud actif NA3 envoie également une capsule à la plate-forme PF de commande pour qu'elle supprime l'objet gagné des objets mis en jeu et qu'elle renvoie une capsule, au noeud NA3, de création de page d'information afin de modifier la page du serveur SW comprenant la liste des objets mis en jeu (étape 23).

Dans le cas où le joueur a perdu, le message inclus dans la page d'informations qui lui est transmise peut en outre comporter une autre sur-couche de http dans un hyper lien pointant vers la passerelle P, pour lui permettre de faire une autre tentative. Dans ce cas, on peut également prévoir de mettre un compteur dans le code pour limiter le nombre de tentatives par joueur.

Le système qui vient d'être décrit, ainsi que son procédé de mise en oeuvre, n'est qu'une illustration et n'est en aucun cas limité à cet exemple. Il trouve son application dans l'accès à de nombreux types de services déployés sur réseaux actifs. Ainsi, un autre exemple consiste à instaurer un système de vote. Dans ce cas, les noeuds actifs NA2 situés à proximité des usagers d'Internet, récoltent, par l'intermédiaire d'une ou plusieurs passerelles P, les choix de chacun des usagers sur une question précise. Ces noeuds comptabilisent alors le nombre de votes pour chaque choix possible puis, lorsque le temps du vote s'est écoulé, les résultats sont transmis au noeud actif NA3 du serveur S central. Ce noeud NA3 additionne alors les résultats en provenance des différents noeuds actifs NA2 du réseau ayant reçu les votes puis il crée une page web, à destination du serveur SW, contenant les résultats du vote. Dans ce cas, le principe de fonctionnement du système reste identique mais ce sont les traitements effectués sur les données qui changent. Ainsi, les noeuds NA2 ne fonctionnent plus comme comparateurs mais plutôt comme trieurs.

Un avantage de ce système réside dans le fait que le temps de latence, au cours des échanges entre l'usager et le réseau, est réduit puisque l'usager dialogue directement avec un routeur R d'accès situé à proximité, sans passer par le serveur SW distant. De plus, le nombre d'usagers pouvant accéder simultanément aux même données véhiculées sur le même réseau actif peut être considérablement augmenté puisque les traitements ne se font plus uniquement sur le serveur SW mais en délocalisé sur différents noeuds actifs du réseau actif. Ainsi, la charge du serveur SW et la bande passante du coeur du réseau Internet sont considérablement réduites.

## Revendications

1. Système d'accès à des données véhiculées dans des paquets actifs sur un réseau actif constitué de noeuds actifs (NA2, NA3) interconnectés, à partir d'au moins un terminal (T) apte à communiquer selon un protocole de communication en mode non connecté pour visualiser au moins une page d'informations hébergée par un serveur (SW) distant, **caractérisé en ce qu'**une sur-couche (sc) de protocole de communication en mode non connecté est stockée dans un hyper lien de ladite page d'informations pour permettre l'envoi d'une requête spécifique de création d'un paquet actif à une passerelle (P) apte, d'une part à extraire les informations contenues dans ladite requête spécifique pour créer ledit paquet actif et, d'autre part à extraire les données contenues dans un paquet actif lui parvenant d'un noeud actif (NA2) pour créer une page d'informations.

2. Système selon la revendication 1, **caractérisé en ce qu'**un noeud actif (NA3) reçoit les ordres d'une plate-forme (PF) de commande pour d'une part enregistrer dans une mémoire lesdites données à véhiculer sur le réseau actif et d'autre part créer au moins une page d'informations, contenant une liste desdites données disponibles sur le réseau actif, à destination du serveur (SW).

3. Système selon l'une des revendications précédentes, **caractérisé en ce que** le noeud actif (NA3) et le serveur (SW) sont implantés dans un serveur (S) central.

4. Système selon l'une des revendications précédentes, **caractérisé en ce que** la passerelle (P) est implantée dans un routeur (R) d'accès situé à proximité du terminal (T) et communique d'une part avec le serveur (SW) distant et un navigateur (NAV) implanté dans le terminal (T) selon le protocole de communication en mode non connecté, et d'autre part avec au moins un noeud actif (NA2) du réseau actif par l'intermédiaire de paquets actifs.

5. Système selon l'une des revendications précédentes, **caractérisé en ce que** le noeud actif (NA2) est implanté dans un routeur (R) d'accès situé à proximité du terminal et permet d'établir une communication entre le réseau actif et le navigateur (NAV) du terminal (T), via la passerelle (P).

6. Procédé de mise en oeuvre du système selon l'une quelconque des revendications précédentes, **caractérisé en ce que** ledit procédé comporte les étapes consistant à :

   - sélectionner un élément dans ladite page d'informations, afin d'activer ladite sur-couche (sc) de manière à ce qu'elle génère une requête spécifique de création de paquet actif,
   - créer ledit paquet actif en y insérant les données transférées avec ladite requête spécifique,
   - envoyer ledit paquet actif à un noeud actif (NA2) du réseau actif,

- attendre, en réponse dudit noeud actif (NA2), un paquet actif dont les données sont écrites dans un format compatible avec le protocole de communication non connecté, de manière à ce que les données puissent être extraites et renvoyées vers le navigateur (NAV) du terminal (T), sous forme d'une page d'informations.

**7.** Procédé selon la revendication 6, **caractérisé en ce que** la page d'informations est envoyée directement de la passerelle (P) vers le navigateur (NAV).

**8.** Procédé selon la revendication 6, **caractérisé en ce que** la page d'informations est envoyée du noeud actif (NA3) vers le serveur (SW) distant, puis déchargée vers le navigateur (NAV).

**Claims**

**1.** System of accessing data conveyed in active packets over an active network made up of interconnected active nodes (NA2, NA3), from at least one terminal (T) capable of communicating using a connectionless mode communication protocol, to view at least one page of information hosted by a remote server (SW), **characterized in that** a connectionless mode communication protocol further layer (sc) is stored in a hyperlink of said page of information to enable a specific active packet creation request to be sent to a gateway (P) capable, on the one hand, of extracting the information contained in said specific request to create said active packet and, on the other hand, of extracting the data contained in an active packet reaching it from an active node (NA2) to create a page of information.

**2.** System according to Claim 1, **characterized in that** an active node (NA3) receives the instructions from a control platform (PF) to, on the one hand, store in a memory said data to be conveyed over the active network and, on the other hand, create at least one page of information, containing a list of said data available on the active network, intended for the server (SW).

**3.** System according to one of the preceding claims, **characterized in that** the active node (NA3) and the server (SW) are located in a central server (S).

**4.** System according to one of the preceding claims, **characterized in that** the gateway (P) is located in an access router (R) located near to the terminal (T) and communicates, on the one hand, with the remote server (SW) and a browser (NAV) located in the terminal (T) using the connectionless mode communication protocol, and, on the other hand, with at least one active node (NA2) of the active network via active packets.

**5.** System according to one of the preceding claims, **characterized in that** the active node (NA2) is located in an access router (R) located near to the terminal and allows a call to be set up between the active network and the browser (NAV) of the terminal (T), via the gateway (P).

**6.** Method of implementing the system according to any one of the preceding claims, **characterized in that** said method comprises steps consisting in:

- selecting an element in said page of information, in order to activate said further layer (sc) so that it generates a specific active packet creation request,
- creating said active packet, inserting into it the data transferred with said specific request,
- sending said active packet to an active node (NA2) of the active network,
- waiting, in response to said active node (NA2), for an active packet with data written in a format compatible with the connectionless communication protocol, so that the data can be extracted and returned to the browser (NAV) of the terminal (T), in the form of a page of information.

**7.** Method according to Claim 6, **characterized in that** the page of information is sent directly from the gateway (P) to the browser (NAV).

**8.** Method according to Claim 6, **characterized in that** the page of information is sent from the active node (NA3) to the remote server (SW), then dumped to the browser (NAV).

**Patentansprüche**

1. Zugriffssystem auf Daten, die in aktiven Paketen in einem aktiven Netz übermittelt werden, das aus miteinander verbundenen aktiven Knoten (NA2, NA3) besteht, ausgehend von mindestens einem Terminal (T), das gemäß einem Kommunikationsprotokoll im Offline-Modus kommunizieren kann, um mindestens eine Informationsseite anzuzeigen, die in einem fernen Server (SW) untergebracht ist, **dadurch gekennzeichnet, dass** eine Ober-Schicht (sc) eines Kommunikationsprotokolls im Offline-Modus in einem Hyperlink der Informationsseite gespeichert ist, um das Senden einer spezifischen Forderung zur Erzeugung eines aktiven Pakets an ein Gateway (P) zu ermöglichen, das in der Lage ist, einerseits die in der spezifischen Forderung enthaltenen Informationen zu entnehmen, um das aktive Paket zu erzeugen, und andererseits die in einem aktiven Paket enthaltenen Daten zu entnehmen, das von einem aktiven Knoten (NA2) zu ihm gelangt, um eine Informationsseite zu erzeugen.

2. System nach Anspruch 1, **dadurch gekennzeichnet, dass** ein aktiver Knoten (NA3) die Befehle einer Steuerplattform (PF) empfängt, um einerseits in einem Speicher die über das aktive Netz zu übermittelnden Daten zu speichern, und um andererseits mindestens eine Informationsseite, die eine Liste der auf dem aktiven Netz verfügbaren Daten enthält, für den Server (SW) zu erzeugen.

3. System nach einem der vorhergehenden Ansprüche, **dadurch gekennzeichnet, dass** der aktive Knoten (NA3) und der Server (SW) in einen zentralen Server (S) eingesetzt sind.

4. System nach einem der vorhergehenden Ansprüche, **dadurch gekennzeichnet, dass** das Gateway (P) in einen Zugriffsrouter (R) eingesetzt ist, der sich in der Nähe des Terminals (T) befindet, und einerseits mit dem fernen Server (SW) und mit einem in das Terminal (T) eingesetzten Navigator (NAV) gemäß dem Kommunikationsprotokoll im Offline-Modus und andererseits mit mindestens einem aktiven Knoten (NA2) des aktiven Netzes über aktive Pakete kommuniziert.

5. System nach einem der vorhergehenden Ansprüche, **dadurch gekennzeichnet, dass** der aktive Knoten (NA2) in einen Zugriffsrouter (R) eingesetzt ist, der sich in der Nähe des Terminals befindet, und es ermöglicht, über das Gateway (P) eine Kommunikation zwischen dem aktiven Netz und dem Navigator (NAV) des Terminals (T) aufzubauen.

6. Verfahren zur Anwendung des Systems nach einem der vorhergehenden Ansprüche, **dadurch gekennzeichnet, dass** es die folgenden Schritte aufweist:

   - Auswählen eines Elements auf der Informationsseite, um die Ober-Schicht (sc) zu aktivieren, damit sie eine spezifische Anforderung zur Erzeugung eines aktiven Pakets generiert,
   - Erzeugung des aktiven Pakets, indem die mit der spezifischen Anforderung übertragenen Daten in dieses eingefügt werden,
   - Senden des aktiven Pakets an einen aktiven Knoten (NA2) des aktiven Netzes,
   - als Antwort des aktiven Knotens (NA2), Erwartung eines aktiven Pakets, dessen Daten in einem mit dem Offline-Kommunikationsprotokoll kompatiblen Format geschrieben sind, damit die Daten entnommen und zum Navigator (NAV) des Terminals (T) in Form einer Informationsseite zurückgesendet werden können.

7. Verfahren nach Anspruch 6, **dadurch gekennzeichnet, dass** die Informationsseite direkt vom Gateway (P) zum Navigator (NAV) gesendet wird.

8. Verfahren nach Anspruch 6, **dadurch gekennzeichnet, dass** die Informationsseite vom aktiven Knoten (NA3) zum fernen Server (SW) gesendet und dann zum Navigator (NAV) entladen wird.

T ⌇   R ⌇   S ⌇

| NAV | | | SW |
| NA1 | NA2 | | NA3 |

I

PF

## Fig. 1
(ART ANTERIEUR)

T ⌇   R ⌇   S ⌇

| NAV | | | sc | SW |
| | P | | | |
| | NA2 | | NA3 | |

I

PF

## Fig. 2

**Fig. 3**

**Fig. 4**